(19) Europäisches Patentamt
European Patent Office
Office européen des brevets

(11) **EP 3 717 954 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **18796921.7**

(22) Anmeldetag: **01.11.2018**

(51) Internationale Patentklassifikation (IPC):
**G02B 27/01** *(2006.01)*   **B60K 35/00** *(2006.01)*
**G01C 21/34** *(2006.01)*   **G01C 21/36** *(2006.01)*

(52) Gemeinsame Patentklassifikation (CPC):
**G02B 27/0101; B60K 35/00;** B60K 2370/1529;
B60K 2370/175; B60K 2370/177; B60K 2370/188;
G01C 21/343; G01C 21/365; G02B 2027/0141

(86) Internationale Anmeldenummer:
**PCT/EP2018/079957**

(87) Internationale Veröffentlichungsnummer:
**WO 2019/105679 (06.06.2019 Gazette 2019/23)**

(54) **VERFAHREN ZUR ANZEIGE DES VERLAUFS EINER TRAJEKTORIE VOR EINEM FAHRZEUG ODER EINEM OBJEKT MIT EINER ANZEIGEEINHEIT, VORRICHTUNG ZUR DURCHFÜHRUNG DES VERFAHRENS**

METHOD FOR DISPLAYING THE COURSE OF A TRAJECTORY IN FRONT OF A VEHICLE OR AN OBJECT BY MEANS OF A DISPLAY UNIT, AND DEVICE FOR CARRYING OUT THE METHOD

PROCÉDÉ D'AFFICHAGE DU DÉROULEMENT D'UNE TRAJECTOIRE DEVANT UN VÉHICULE OU UN OBJET POURVU D'UNE UNITÉ D'AFFICHAGE, DISPOSITIF DE MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2017 DE 102017221488**

(43) Veröffentlichungstag der Anmeldung:
**07.10.2020 Patentblatt 2020/41**

(73) Patentinhaber: **Volkswagen Aktiengesellschaft 38440 Wolfsburg (DE)**

(72) Erfinder:
• **KLEEN, Andro**
  **38124 Braunschweig (DE)**
• **WITTKÄMPER, Michael**
  **38106 Braunschweig (DE)**
• **WYSZKA, Robert Jan**
  **30165 Hannover (DE)**
• **SADOVITCH, Vitalij**
  **38102 Braunschweig (DE)**

(56) Entgegenhaltungen:
• **Anonymous: "WayRay Augment Reality Navigation System for Alibaba", , 15. März 2017 (2017-03-15), XP055550373, Gefunden im Internet: URL:https://www.diorama.com/2017/03/15/way ray-augment-reality-navigation-system-alib aba/ [gefunden am 2019-02-01]**

EP 3 717 954 B1

**Beschreibung**

Der Vorschlag betrifft das technische Gebiet von Fahrerinformationssystemen, die auch unter dem Begriff Infotainmentsystem bekannt sind. Dabei geht es im Besonderen um ein Verfahren zur Anzeige eines Trajektorien-Verlaufs vor einem Fahrzeug oder einem Objekt mit Zusatzinformationen. Solche Systeme werden vor allem in Fahrzeugen eingesetzt. Es besteht aber auch die Möglichkeit des Einsatzes der Erfindung bei Fußgängern, Radfahrern, etc. mit Datenbrille. Der Vorschlag betrifft weiterhin eine entsprechend ausgelegte Vorrichtung zur Durchführung des Verfahrens sowie ein Kraftfahrzeug und ein Computerprogramm.

Zur Zeit wird intensiv an Technologien gearbeitet, die später ein autonomes Fahren ermöglichen sollen. Ein erster Ansatz ist dabei, den Fahrer nicht komplett von seinen Aufgaben zu entlasten, sondern es zu ermöglichen, dass der Fahrer jederzeit die Steuerung des Fahrzeuges übernehmen kann. Der Fahrer nimmt außerdem Überwachungsfunktionen wahr. Durch neuere Technologien im Bereich der Fahrerinformationssysteme wie Head-Up Display (HUD) ist es möglich, den Fahrer besser über das Geschehen im Umfeld seines Fahrzeuges zu informieren.

Für die nahe Zukunft ist deshalb davon auszugehen, dass systemseitig durch den Einsatz neuerer Technologien (Fahrzeug-zu-Fahrzeug-Kommunikation, Einsatz von Datenbanken, Fahrzeugsensorik, etc.) umfassende Informationen über Objekte (insb. Fahrzeuge) im direkten Umfeld des eigenen Fahrzeugs verfügbar sein werden. Im Bereich Fahrzeugsensorik werden insbesondere die folgenden Komponenten genannt, die eine Umfeldbeobachtung ermöglichen: RADAR-Geräte entsprechend Radio Detection and Ranging, LIDAR-Geräte, entsprechend Light Detection and Ranging, hauptsächlich für den Bereich Abstandserfassung / -warnung und Kameras mit entsprechender Bildverarbeitung für den Bereich der Objekterkennung. Diese Daten über die Umwelt können somit als Basis für systemseitige Fahrempfehlungen, Warnungen, etc. herangezogen werden. Beispielsweise sind so Anzeigen / Warnungen darüber denkbar, in welche Richtung (möglicherweise in die eigene Trajektorie) ein anderes, umgebendes Fahrzeug abbiegen will.

Die Fahrzeug-zu-Fahrzeug-Kommunikation ist mittlerweile auch mittels Mobilkommunikation mit Systemen wie LTE entsprechend Long Term Evolution möglich. Hier wurde von der Organisation 3GPP eine Spezifikation mit Namen LTE V2X verabschiedet. Als Alternative stehen auf WLAN-Technologie beruhende Systeme für die Fahrzeug-Direktkommunikation zur Verfügung, insbesondere das System nach WLAN p.

Der Begriff "autonomes Fahren" wird in der Literatur teilweise unterschiedlich benutzt.

Zur Klärung dieses Begriffs wird deshalb hier noch folgender Einschub präsentiert. Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomen Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.

- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab.

Aufgrund der derzeitigen Entwicklung hin zu höheren Autonomiestufen, wo aber viele Fahrzeuge nach wie vor noch vom Fahrer gesteuert werden, ist davon auszugehen, dass entsprechende zusätzliche Informationen mittelfristig bereits für manuell geführte Fahrzeuge und nicht erst langfristig für hochautomatisierte Systeme genutzt werden können.

Für die Fahrer-Fahrzeug-Interaktion stellt sich hierbei die Frage, wie diese Informationen so dargestellt werden können, dass ein echter Mehrwert für den menschlichen Fahrer entsteht und er die bereitgestellten Informationen auch schnell, respektive intuitiv, verorten kann. Folgende Lösungen in diesem Bereich sind dabei schon aus dem Stand der Technik bekannt.

Eine Zukunftsvision in der Automobilbranche ist es, die Windschutzscheibe des eigenen Fahrzeugs mit virtuellen Elementen bespielen zu können um dem Fahrer einige Vorteile zu ermöglichen. Genutzt wird die sogenannte "Augmented Reality"-Technologie (AR). Weniger geläufig ist der entsprechende deutschsprachige Begriff der "erweiterten Realität". Dabei wird die reale Umgebung mit virtuellen Elementen angereichert. Das hat mehrere Vorteile: Der Blick nach unten, auf andere Displays als der Windschutzscheibe, entfällt, da viele relevante Informationen auf der Windschutzscheibe abgebildet werden. So muss der Fahrer seinen Blick nicht von der Fahrbahn abwenden. Außerdem ist durch die positionsgenaue Verortung der virtuellen Elemente in der realen Umwelt ein geringerer kognitiver Aufwand seitens des Fahrers wahrscheinlich, da keine Interpretation einer Grafik auf einem gesonderten Display erfolgen muss. Hinsichtlich des automatischen Fahrens kann ebenfalls ein Mehrwert erzeugt werden.

Da die technologischen Mittel heutzutage entsprechend begrenzt sind, kann davon ausgegangen werden, dass mittelfristig keine voll bespielbaren Windschutzscheiben in Fahrzeugen anzutreffen sein werden. Deshalb finden heute Head-Up Displays in den Fahrzeugen Verwendung. Bei diesen Displays handelt es sich eigentlich um Projektionseinheiten, die ein Bild auf die Windschutzscheibe projizieren. Dieses Bild befindet sich jedoch aus der Sicht des Fahrers je nach Bauart des Moduls wenige Meter bis 15 Meter vor dem Fahrzeug.

Das "Bild" setzt sich dabei folgendermaßen zusammen: Es handelt sich dabei weniger um ein virtuelles Display, sondern eher um eine Art "Schlüsselloch" in die virtuelle Welt. Die virtuelle Umgebung wird theoretisch über die reale Welt gelegt und enthält die virtuellen Objekte, die den Fahrer bei der Fahrt unterstützen und informieren. Die begrenzte Anzeigefläche des HUD hat zur Folge, dass nur ein Ausschnitt der realen Welt mit HUD-Einblendungen bespielt werden kann. Man schaut also durch die Anzeigefläche des HUD auf den Ausschnitt der virtuellen Welt. Da diese virtuelle Umgebung die reale Umgebung ergänzt, spricht man in diesem Fall auch von einer "Mixed Reality".

Aus der DE 10 2007 016 868 A1 ist ein Verfahren zur Anzeige eines Fahrtbahnverlaufs vor einem Fahrzeug, wobei eine aktuelle Geschwindigkeit des Fahrzeugs bestimmt wird. Dabei werden vor dem Fahrzeug liegende Punkte einer Fahrzeugumgebung so bestimmt, dass ein optischer Fluss dieser Punkte unter Berücksichtigung der aktuellen Fahrzeuggeschwindigkeit bestimmt wird und dass Symbole zur Darstellung des optischen Flusses für eine Darstellung des Fahrbahnverlaufs in die Head-Up-Anzeige eingeblendet werden.

Aus der WO 2005/053991 A1 ist ein Verfahren und System zur Unterstützung eines Pfadsteuerungsverfahrens bekannt. Das Verfahren und Systems dient zur Unterstützung der Pfadsteuerung, insbesondere eines Fahrzeugs auf einer Straße oder in einer Geländeumgebung oder eines Schiffes oder eines Flugzeugs. Dabei besteht das Verfahren in der Durchführung aus mindestens einem der folgenden Schritte (a) und (b): (a) Schätzen eines tatsächlichen zukünftigen Pfades des Fahrzeugs auf der Grundlage von Fahrzeugbewegungsdaten und optische und / oder akustische und / oder taktile Anzeige des geschätzten tatsächlichen zukünftigen Weges an den Fahrer, (b) Erfassen des tatsächlichen gegenwärtigen Pfades des Fahrzeugs, Abschätzen einer gegenwärtigen Abweichung des detektierten tatsächlichen gegenwärtigen Weges von einem gewünschten gegenwärtigen Pfad und optische und / oder akustische und / oder taktile Anzeige der geschätzten gegenwärtigen Abweichung zum Fahrer.

Aus der DE 10 2011 075 887 A1 ist ein Head-Up Display bekannt, bei dem die Umgebungshelligkeit erfasst wird und die Lichtintensität des abgestrahlten Lichts je nach Umgebungshelligkeit angepasst wird. Auch ist bei dem vorgestellten Head-Up Display das Kontrastverhältnis verbessert.

Aus der DE 10 2012 222 380 A1 ist ein stereoskopisches Head-Up Display bekannt, bei dem ein lichttechnischer Parameter der Anzeigeeinheit, wie die Helligkeit und Hintergrundfarbe aus der Umgebung des Fahrzeugs, insbesondere nur in Abhängigkeit von der Position des Fahrzeugs, einem ermittelten Niederschlag an der Position des Fahrzeugs, einer ermittelten Umgebungstemperatur an der Position des Fahrzeugs, einer Zeitinformation und / oder von wenigstens einem Wert einer externen Datenquelle bestimmt wird.

Aus der DE 10 2016 200 136 A1 ist ein Verfahren zum Betreiben eines stereoskopischen Head-Up Displays bekannt, wobei das Verfahren einen Schritt des Veränderns umfasst, in dem eine für das rechte Auge bestimmte Bildinformation und / oder eine für das linke Auge bestimmte Bildinformation abhängig von einem Verhältnis oder einer Differenz zwischen einem Übersprechen-Wert, der ein Übersprechen zwischen der für das rechte Auge und der für das linke Auge bestimmten Bildinformation repräsentiert, und einem Schwellenwert verändert wird.

Aus der WO 2005/121707 ist es bekannt, auf einem Head-Up Display ein Navigationsrouteobjekt in der Form eines Überkopf-Navigationskabels einzublenden. Das Überkopf-Navigationskabel wird in einem Abstand oberhalb der Fahrbahn eingeblendet. Das Überkopf-Navigationskabel kann auch durch entlang des Kabels angeordnete Symbole angedeutet werden.

Ein großer Vorteil der bisher bekannten "Augmented Reality"-Anzeigen (AR-Anzeigen) besteht darin, die entsprechenden Anzeigen direkt innerhalb bzw. als Teil der Umwelt darzustellen. Relativ naheliegende Beispiele beziehen sich meist auf den Bereich der Navigation. Während klassische Navigationsanzeigen (in herkömmlichen HUD) in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten. Da die Anzeigen als "Teil der Umwelt" dargestellt werden können, sind äußerst schnelle und intuitive Interpretationen für den Nutzer möglich. Dennoch weisen die bisher bekannten Ansätze auch verschiedene Probleme auf, für die zum jetzigen Zeitpunkt keine Lösungen bekannt sind.

Aus Anonymous: "WayRay Augment Reality Navigation System for Alibaba", 15. März 2017 (2017-03-15), XP055550373, ist es bekannt, dass eine AR-Projektierung mittels Head-Up Display den Verlauf einer Fahrbahn als Trajektorie in einem Fahrzeug anzeigt, wobei die erzeugte jeweilige Fahrbahnbegrenzung der zu nutzenden Fahrbahn, innerhalb der das Fahrzeug zu steuern ist, mittels kleinen Punkten angezeigt wird. Diese Fahrbahnbegrenzungen in Form von Trajektorien können durch die angezeigte Aneinanderreihung der Punkte als Linien für den Nutzer wahrgenommen werden.

Die bekannten Lösungen sind mit verschiedenen Nachteilen behaftet. Dies wurde im Rahmen der Erfindung erkannt. Bei den bekannten Lösungen besteht das Problem, dass je nach Umgebungsbedingungen die Darstellung des Fahrrichtungsverlaufes entweder schlecht erkennbar oder eben zu auffällig ist und vom eigentlichen Geschehen auf der Fahrbahn ablenkt.

Grundidee dieser Erfindung ist, auf verdeckende Flächen zu verzichten und statt dessen die Anzeigeinhalte zu fragmentieren. In diesem Vorgehen werden eine Reihe von Vorteilen gesehen, die neben der Erfüllung der Anforderungen geringe Verdeckung der Umwelt und zeitgleich eine ausreichende Fehlertoleranz, darin bestehen, dass der menschliche Wahrnehmungsapparat aufgrund der evolutionsbiologischen Voraussetzungen mühelos in der Lage ist, die einzelnen Anzeigeelemente als zusammenhängenden Hinweis zu verstehen. Das Mittel der Wahl für die Visualisierung der einzelnen Rasterelemente waren einfache weiße Kugeln bzw. Punkte.

Mit den aktuellen Umsetzungen im Fahrzeug zeigten sich zudem zwei weitere interessante Aspekte. Zum einen kann mit der Verwendung der einfachen Elementform (weiße Kugeln / Punkte) nur ein begrenztes Maß an ästhetischer Wertigkeit erreicht werden. Zum anderen führt die Verwendung von vollflächigen Anzeigeelementen zu einer konstanten Helligkeit und damit Wahrnehmbarkeit der dargestellten Elemente. Für besonders helle Umwelten (sonniger Tag) ist dieser Effekt durchaus wünschenswert. Für dunklere Umgebungen (spätere Tageszeit, starke Bewölkung, Tunnel, etc.) können hier allerdings unerwünscht hohe Sichtbarkeiten auftreten, die zu ungewollt hoher Aufmerksamkeitszuwendung führen.

Außerdem kann es vorkommen, dass zwar eine ausreichende Helligkeit vorliegt, die "Augmented Reality"-HUD Elemente aber aufgrund von starkem Regen schlecht sichtbar sind. Sowohl im Falle von schwierigen Helligkeitsverhältnissen als auch im Falle von schlechter Sicht von anderweitigen Einflüssen (z.B. Regen) sollte eine Adaption der Anzeigeelemente erfolgen.

Es besteht also der Bedarf für weitere Verbesserungen bei der Anzeige von Fahrtrichtungsverläufen (Navigations-Trajektorien), die variabel angepasst werden können, damit es je nach Umgebungsbedingungen nicht zu Ablenkungen des Fahrers kommen kann.

Die Erfindung setzt sich zur Aufgabe, einen solchen Ansatz zu finden. Eine weitere Aufgabe besteht darin, dass umgekehrt verhindert werden soll, dass der Fahrtrichtungsverlauf bei bestimmten Umgebungsbedingungen zu schwach dargestellt wird, so dass der Fahrer den Verlauf schlecht verfolgen kann.

Diese Aufgabe wird durch ein Verfahren zur Anzeige eines Verlaufs einer Trajektorie vor einem Fahrzeug oder einem Objekt mit Hilfe einer Anzeigeeinheit gemäß Anspruch 1, eine Vorrichtung zur Durchführung des Verfahrens gemäß Anspruch 11 sowie ein Kraftfahrzeug gemäß Anspruch 13 und ein Computerprogramm gemäß Anspruch 14 gelöst.

Die abhängigen Ansprüche beinhalten vorteilhafte Weiterbildungen und Verbesserungen der Erfindung entsprechend der nachfolgenden Beschreibung dieser Maßnahmen.

Die Lösung gemäß der Erfindung setzt auf Anpassung der Darstellung an die Umgebungsbedingungen. Dazu werden die Umgebungsbedingungen mit der geeigneten Sensorik erfasst und es werden die für die Rasterdarstellung des Fahrtrichtungsverlaufes (Navigationspfad) in Form eines Fahrbandes oder Fahrschlauches verwendeten Symbole je nach erfasster Umgebungsbedingung unterschiedlich dargestellt. Der Fahrtrichtungsverlauf wird wie bisher mit Hilfe einer Anzeigeeinheit in das Sichtfeld des Fahrers eingeblendet, wobei der Verlauf wiederum in Rasterform dargestellt wird.

Die Erfindung besteht in einer Ausgestaltung darin, dass zunächst Symbole für die Darstellung der Rasterpunkte verwendet werden, die nur aus der Outline bzw. Umrandung bestehen. Diese Anzeigemöglichkeit kann z.B. bei eher dunklen Umweltgegebenheiten verwendet werden, da die dargestellten Elementteile eine ausreichende Sichtbarkeit für den Fahrer ermöglichen. Voraussetzung hierfür ist die Kopplung an mindestens eine sensorische Einheit, die die Umweltgegebenheiten feststellt. Bei helleren Umweltgegebenheiten erfolgt eine Anpassung der Darstellung der Symbole bis hin zu einer vollflächigen Darstellung.

Darüber hinaus sollte auch eine Kopplung an sensorische Einheiten bzw. Softwaremodule erfolgen, die die Sichtverhältnisse im Hinblick auf die AR-Anzeigen bewerten.

Als Parameter zur Bewertung der Umweltgegebenheit kommt in einer besonders bevorzugten Ausführungsform die Umgebungshelligkeit in Betracht.

Bei niedriger Umgebungshelligkeit werden die Punkte des Rasters mit Symbolen dargestellt, von denen nur die Umrandung dargestellt wird. In einem Beispiel kann es sich um einfache grafische Symbole wie Kreise, Kugeln, Rechtecke, Quader, Dreiecke, Stäbe, usw. handeln.

Dies hat den Vorteil, dass die dargestellten Anteile der Symbole ausreichen, um vom Fahrer angemessen wahrgenommen zu werden.

Bei hoher Umgebungshelligkeit werden die Punkte des Rasters mit Symbolen dargestellt, die vollflächig ausgefüllt dargestellt werden. Dies hat den Vorteil, dass die Symbole stärker betont werden, um vom Fahrer bei diesen Umweltbedingungen besser wahrgenommen werden zu können. Vorzugsweise geschieht eine stufenlose Anpassung des Füllgrades der Symbole zwischen den beiden Extremwerten Dunkelheit und hohe Sonneneinstrahlung.

In einer weiteren Ausgestaltung der Erfindung werden als Umweltgegebenheit Wetterbedingungen, insbesondere Niederschlagsarten wie Regen, Starkregen, Schnee, Hagel oder Nebel, ausgewertet. Voraussetzung ist das Vorhandensein einer entsprechenden Sensorik. Alternativ kann auch ein sehr genauer Wetterbericht herangezogen werden, der z.B. über Internet geladen wird. Zu erwähnen sind auch andere Wetterbedingungen wie Windgeschwindigkeiten und Temperaturbedingungen, die Berücksichtigung finden können.

In einer weiteren Ausführungsart werden bei Regen und / oder Starkregen die Punkte des Rasters mit Symbolen dargestellt, die eine Form aufweisen, die von Regen, insbesondere Regentropfen, besser unterschieden werden kann. Hier kommt z.B. der Einsatz einer rechteckigen Symbolform in Frage.

Darüber hinaus können als Umweltgegebenheit bestimmte Betriebsmodi des Fahrzeuges, wie Motoreinstellungen, Fahrwerkseinstellungen und Fahrassistenzeinstellungen ausgewertet werden. Bei einer "Sport"-Einstellung könnten z.B. als Symbole Dreiecke verwendet werden, bei einer "Normal"-Einstellung Rechteck-Symbole und bei einer "Eco"-Einstellung Kreis-Symbole.

Weiterhin wird in einer weiteren Ausführungsart je nach Umweltgegebenheit zudem auch die Größe und / oder die Farbe der Symbole variiert. So wäre es vorteilhaft, für die zuvor erwähnten Betriebsmodeeinstellungen "Sport", "Normal" und "Eco" neben der Form der Symbole auch die Farbe anzupassen. Z.B. könnte für den "Sport"-Modus die Farbe Rot eingesetzt werden und entsprechend für den "Normal"-Modus die Farbe Blau oder Schwarz und für den "Eco"-Modus die Farbe Grün.

In einer weiteren Ausgestaltung wird als Umweltgegebenheit die Fahrbahnbeschaffenheit und / oder die Fahrbahnumgebung und / oder die Verkehrssituation erfasst und ausgewertet. Als Fahrbahnbeschaffenheit kommen verschiedene Arten in Betracht. Bei bestimmten Pflasterungen wie Kopfsteinpflaster kann es z.B. vorteilhaft sein, abweichende Formen der Rastersymbole zu verwenden. Andere Fahrbahnbeschaffenheiten sind Beton, verschiedene Asphaltarten wie Flüsterasphalt, Wald- und Feldwege etc. Wenn viele Schlaglöcher auf der Fahrbahn vorhanden sind, sollte ebenfalls eine Anpassung erfolgen. Die Schlaglöcher sollten gut erkennbar sein, damit der Fahrer ihnen ausweichen kann. Auch wenn eine Vielzahl von Linienmarkierungen (z.B. Schraffuren bei Sperrflächen) auf der Fahrbahn vorhanden sind, könnte eine Anpassung der Symbole erfolgen.

Allgemein geht es darum die Anpassung der Rastersymbole dynamisch an die Umweltgegebenheiten anzupassen. Auch für die Fahrbahnumgebung und die Verkehrssituation kämen Anpassungen in Frage. Wenn sich das Fahrzeug in einer städtischen Umgebung bewegt, wo das Umfeld eher einem Grauton entspricht, kann durch Verändern der Farbe in Gelb, Blau, Grün für die Rastersymbole eine Akzentuierung erreicht werden. Bei einer bunteren ländlichen Umgebung können die Rastersymbole eher in Grautönen oder anderen monochromen Tönen bleiben. Hier würde also die Fahrbahnumgebung ausgewertet werden. Wenn auf der Fahrbahn viele Fahrzeuge unterwegs sind, z.B. auf einer Autobahn mit sehr vielen Pkw oder Lkw, und beim Heranfahren an ein Stauende die Bremslichter leuchten, sollte jedenfalls eine andere Farbe als Rot für die Rastersymbole gewählt werden. Hier würde also die Verkehrssituation als Umweltgegebenheit ausgewertet werden.

Die Erfindung kann in vorteilhafter Weise auch eingesetzt werden, wenn die Anzeigeeinheit einer Datenbrille entspricht. Dann lässt sich das erfindungsgemäße Verfahren selbst bei Fußgänger, Radfahrern, Kradfahrer usw. einsetzen.

Im Fahrzeug wird die Erfindung vorzugsweise so realisiert, dass die Anzeigeeinheit im Fahrzeug fest installiert ist, z.B. in Form eines Head-Up Displays. Trotzdem wäre eine mögliche Realisierungsform auch mit Hilfe einer Datenbrille möglich, wenn der Einsatz der Datenbrille beim Fahrer in Zukunft erlaubt wäre.

Für eine Vorrichtung zur Durchführung des Verfahrens ist es vorteilhaft, wenn sie eine Anzeigeeinheit aufweist, mit der virtuelle Zusatzinformationen in das Sichtfeld des Fahrers oder der Bedienperson des Objektes eingeblendet werden können. Dies ist bei einem Head-Up Display wie auch bei einer Datenbrille gegeben. Weiterhin sollte diese Vorrichtung eine Recheneinheit aufweisen und die Recheneinheit ein Raster berechnen in der Weise, dass sie die Rasterpunkte so berechnet, dass sie auf Rasterlinien liegen, durch die der Trajektorien-Verlauf angezeigt wird, wobei die Recheneinheit für die Punkte des Rasters Symbole auswählt, von denen je nach Umweltgegebenheit nur die Umrandung oder die vollständig ausgefüllten Symbole dargestellt werden.

Dabei ist es vorteilhaft, wenn die Recheneinheit die ausgewählten Symbole entweder umrechnet, um je nach Umweltgegebenheit nur die Umrandung bis hin zu vollständig ausgefüllten Symbolen darstellen zu können oder entsprechend vorberechnete und abgespeicherte Symbole je nach Umweltgegebenheit für die Darstellung auszuwählen.

Besonders vorteilhaft ist, wenn die Vorrichtung eine Anzeigeeinheit beinhaltet, die als Head-Up Display ausgeführt ist.

Statt eines Head-Up Displays kann in der Vorrichtung als Anzeigeeinheit eine Datenbrille oder ein Monitor eingesetzt werden, auf dem ein Kamerabild angezeigt wird, in das ein Trajektorien-Verlauf eingeblendet wird.

In vorteilhafter Weise kann die erfindungsgemäße Vorrichtung in einem Kraftfahrzeug eingesetzt werden.

Für ein Computerprogramm, das in der Recheneinheit der Vorrichtung zur Abarbeitung kommt, um das erfindungsgemäße Verfahren durchzuführen, gelten die entsprechenden Vorteile wie zu dem erfindungsgemäßen Verfahren beschrieben.

Ausführungsbeispiele der Erfindung sind in den Zeichnungen dargestellt und werden nachfolgend anhand der Figuren näher erläutert.

Es zeigen:

Fig. 1    das Prinzip der Einblendung von Informationen in das Sichtfeld des Fahrers eines Fahrzeuges während der Fahrt mit Hilfe eines Head-Up Displays;

Fig. 2    das typische Cockpit eines Fahrzeuges;

Fig. 3    das Blockschaltbild des Infotainment-Systems des Fahrzeuges;

Fig. 4    zwei Darstellungen von Fahrtrichtungsverläufen, einmal auf gerader Strecke und einmal bei Durchfahren einer Kurve;

Fig. 5    eine Darstellung eines Fahrtrichtungsverlaufs gemäß eines ersten Ausführungsbeispiels der Erfindung;

Fig. 6    eine Darstellung eines Fahrtrichtungsverlaufs gemäß eines zweiten Ausführungsbeispiels der Erfindung;

Fig. 7    eine Darstellung eines Fahrtrichtungsverlaufs gemäß eines dritten Ausführungsbeispiels der Erfindung; und

Fig. 8    ein Flussdiagramm für ein Programm zur Berechnung der Einblendung eines Rasters zur Anzeige des Fahrtrichtungsverlaufs gemäß eines Ausführungsbeispiels der Erfindung.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern.

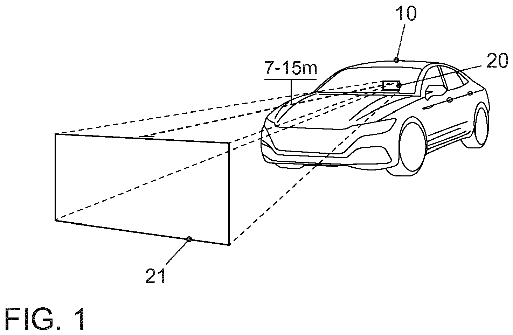

Fig. 1 veranschaulicht die prinzipielle Funktionsweise eines Head-Up Displays. Das Head-Up Display 20 ist im Fahrzeug 10 hinter der Armaturenbrettverkleidung angebracht. Durch Projektion auf die Windschutzscheibe werden Zusatzinformationen in das Sichtfeld des Fahrers eingeblendet. Diese Zusatzinformationen erscheinen so als seien sie auf eine Projektionsfläche 21 im Abstand von 7 - 15 m vor dem Fahrzeug 10 projiziert. Durch diese Projektionsfläche 21 hindurch bleibt aber die reale Welt sichtbar. Mit den eingeblendeten Zusatzinformationen wird quasi eine virtuelle Umgebung erzeugt. Die virtuelle Umgebung wird theoretisch über die reale Welt gelegt und enthält die virtuellen Objekte, die den Fahrer bei der Fahrt unterstützen und informieren. Es wird aber nur auf einen Teil der Windschutzscheibe projiziert, so dass die Zusatzinformationen nicht beliebig im Sichtfeld des Fahrers angeordnet werden können.

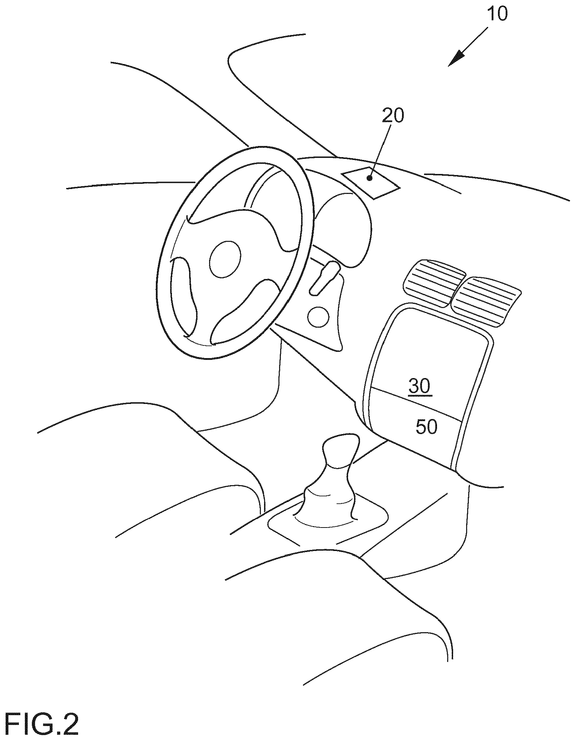

Fig. 2 zeigt das Cockpit des Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen einsetzbar.

In dem Cockpit sind drei Anzeigeeinheiten eines Infotainment-Systems dargestellt. Es handelt sich um das Head-Up-Display 20 und einen berührungsempfindlichen Bildschirm 30, der in der Mittelkonsole angebracht ist. Bei der Fahrt liegt die Mittelkonsole nicht im Sichtfeld des Fahrers. Deshalb werden die Zusatzinformationen während der Fahrt nicht auf der Anzeigeeinheit 30 eingeblendet.

Der berührungsempfindliche Bildschirm 30 dient dabei insbesondere zur Bedienung von Funktionen des Fahrzeugs 10. Beispielsweise können darüber ein Radio, ein Navigationssystem, eine Wiedergabe von gespeicherten Musikstücken und / oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort zusammengesetzt aus den Worten Information und Entertainment (Unterhaltung). Zur Bedienung des Infotainment-Systems wird hauptsächlich der berührungsempfindliche Bildschirm 30 ("Touchscreen") benutzt, wobei dieser Bildschirm 30 insbesondere von einem Fahrer des Fahrzeugs 10, aber auch von einem Beifahrer des Fahrzeugs 10 gut eingesehen und bedient werden kann. Unterhalb des Bildschirms 30 können zudem mechanische Bedienelemente, beispielsweise Tasten, Drehregler oder Kombinationen hiervon, wie beispielsweise Drückdrehregler, angeordnet sein.

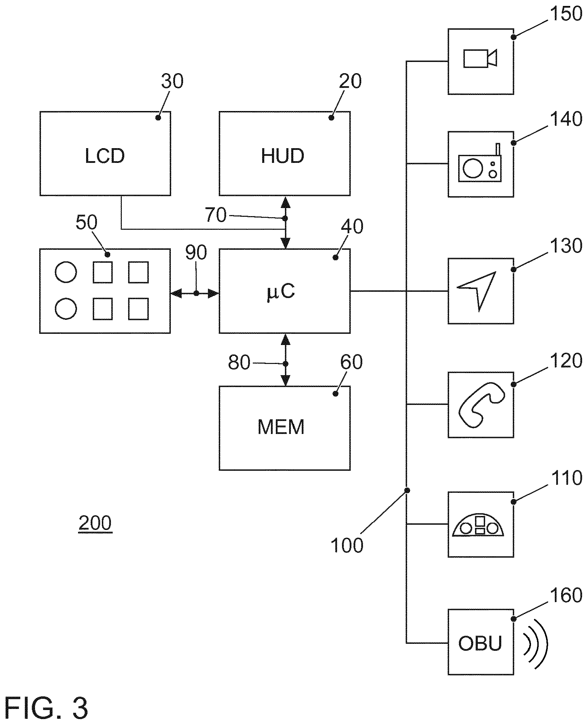

Fig. 3 zeigt schematisch ein Blockschaltbild des Infotainment-Systems 200 sowie beispielhaft einige Teilsysteme oder Applikationen des Infotainment-Systems. Die BedienungsVorrichtung umfasst die berührungsempfindliche Anzeigeeinheit 30, eine Recheneinrichtung 40, eine Eingabeeinheit 50 und einen Speicher 60. Die Anzeigeeinheit 30 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 30 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 30 Steuerdaten zum Ansteuern der Anzeigefläche des Touchscreens 30 von der Recheneinrichtung 40. Über die Datenleitung 70 werden auch Steuerdaten der eingegebenen Befehle von dem Touchscreen 30 zu der Recheneinrichtung 40 übertragen. Mit der Bezugszahl 50 ist eine Eingabeeinheit bezeichnet. Ihr zugehörig sind die schon erwähnten Bedienelemente wie Tasten, Drehregler, Schieberegler, oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw. Typischerweise ist auch eine Lenkradbedienung von Teilen des Infotainmentsystems möglich. Diese Einheit ist nicht separat dargestellt, sondern wird als Teil der Eingabeeinheit 50 betrachtet.

Die Speichereinrichtung 60 ist über eine Datenleitung 80 mit der Recheneinrichtung 40 verbunden. In dem Speicher 60 ist ein Piktogrammverzeichnis und / oder Symbolverzeichnis hinterlegt, mit den Piktogrammen und / oder Symbolen für die möglichen Einblendungen von Zusatzinformationen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie BroadR-Reach in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Hier wird noch erwähnt, dass die Kamera 150 als konventionelle Videokamera ausgelegt sein kann. In diesem Fall nimmt sie 25 Vollbilder/s auf, was bei dem Interlace-Aufnahmemodus 50 Halbbilder/s entspricht. Alternativ kann eine Spezialkamera eingesetzt werden, die mehr Bilder/s aufnimmt, um die Genauigkeit der Objekterkennung bei sich schneller bewegenden Objekten zu erhöhen. Es können mehrere Kameras zur Umfeldbeobachtung eingesetzt werden. Daneben könnten auch die schon erwähnten RADAR- oder LIDAR-Systeme ergänzend oder alternativ eingesetzt werden, um die Umfeldbeobachtung durchzuführen oder zu erweitern. Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Das erfindungsgemäße Verfahren zur Anzeige eines Trajektorien-Verlaufs vor einem Fahrzeug oder einem Objekt mit Hilfe einer Anzeigeeinheit wird im Folgenden anhand von mehreren Ausführungsbeispielen erläutert. Dabei wird als Beispiel eines Trajektorien-Verlaufs der Fahrtrichtungsverlauf vor einem Fahrzeug verwendet.

Für die weiteren Figuren gilt, dass gleiche Bezugszahlen die gleichen Felder und Symbole bezeichnen wie bei der Beschreibung der Figuren 1 bis 3 erläutert.

Wie zuvor beschrieben, ist Grundlage der erfindungsgemäßen Anzeige des Fahrtrichtungsverlaufs ein virtuelles Raster, das in einem Abstand über der tatsächlichen realen Umwelt dargestellt wird. Die reale Umwelt entspricht dem realen Fahrbahnverlauf. Das Raster wird vorzugsweise so projiziert, dass es für den Fahrer so aussieht, dass das Raster in einem Abstand von einigen Zentimetern über der Fahrbahn liegt. Der Abstand kann dabei je nach Ausführungsart variieren.

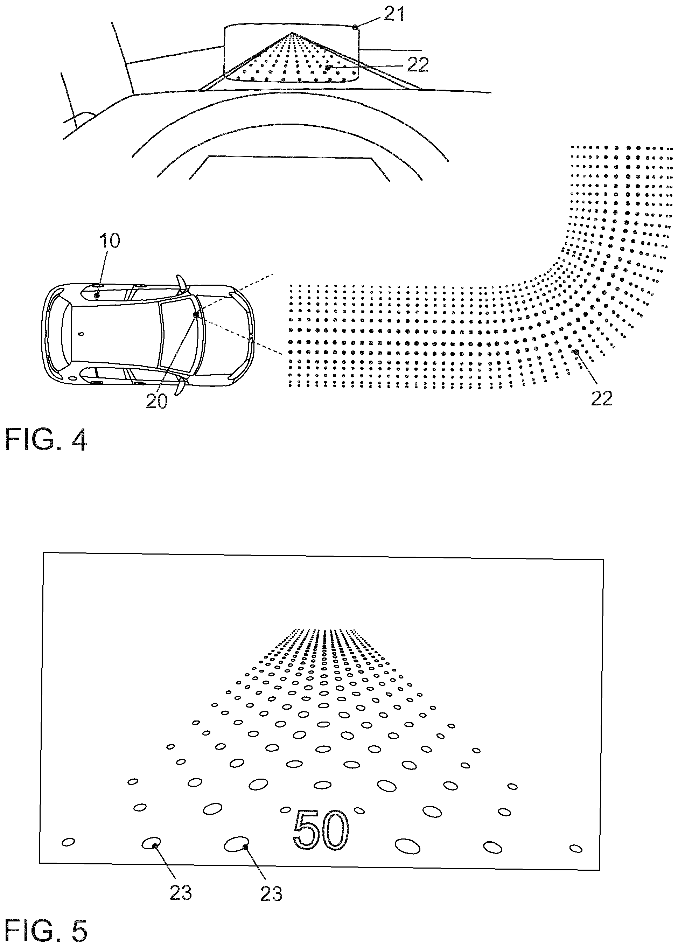

In Fig. 4 ist eine erste Variante dargestellt, wie der Fahrtrichtungsverlauf erfindungsgemäß angezeigt werden kann. Der Fahrtrichtungsverlauf wird typischerweise als Navigationsroute im Rahmen der Navigationsfunktion des Navigationssystems 130 des Fahrzeuges 10 angezeigt. Es wird also dadurch der Weg markiert, der das Fahrzeug 10 zum eingegebenen Ziel führt. Im Dunkeln kann die Anzeige der Fahrtrichtung zur Unterstützung des Fahrers auch unabhängig von einem eingegebenen Ziel eingeblendet werden. In dem Fall würde dadurch der Fahrbahnverlauf angezeigt werden. Das hilft dem Fahrer, da er dann schon früher erkennen kann, welche Kurve oder Abbiegung als nächstes kommt. Die Darstellung des Fahrtrichtungsverlaufs geschieht in diesem Beispiel mit Hilfe eines Punktrasters 22. Das Punktraster 22 erstreckt sich vorzugsweise über die Breite der Fahrspur, auf der das Fahrzeug 10 sich bewegt. Dabei ist die Art der Darstellung in diesem Beispiel so gewählt, dass die Punkte im mittleren Bereich 23 stärker betont sind als die Punkte an den Rändern der Fahrspur. In dem in Fig. 4 gezeigten Beispiel sind die betonten Punkte durch Fettdruck hervorgehoben. Durch die Betonung der Punkte im mittleren Spurbereich wird beim Fahrer der Eindruck einer Linie verstärkt, wie er es auch sonst von Navigationssystemen gewohnt ist. Dies nutzt die schon beschriebene Fähigkeit der menschlichen Wahrnehmung aus, nach der das Gehirn fragmentierte Muster automatisch komplettiert.

In der Fig. 5 wird eine erste Variante der Darstellung des Fahrtrichtungsverlaufes gezeigt, die für den Einsatz bei eher dunklen Umgebungsbedingungen vorteilhaft ist. Statt der vollflächigen Darstellung der Punkte des Rasters 22, mit dem der Fahrtrichtungsverlauf angezeigt wird, wird nur die Umrandung der Symbole 23, mit der die Rasterpunkte markiert sind, angezeigt. Bei diesen dunklen Umgebungsbedingungen reichen die hier in weiß dargestellten Anteile aus, um vom Fahrer angemessen wahrgenommen zu werden. Als Symbole werden in dieser Variante Kreise verwendet. Die Einblendung der Zahl "50" gibt die aktuelle Fahrzeuggeschwindigkeit an.

Wenn die Umgebungshelligkeit zunimmt, werden die Symbole 23 des Rasters 22 zunehmend stärker hervorgehoben. Dies geschieht durch Auffüllen der Symbole vom Rand her. Dies kann stufenlos erfolgen, muss es aber nicht. Auch eine feinstufige Auffüllung käme als Variante in Betracht.

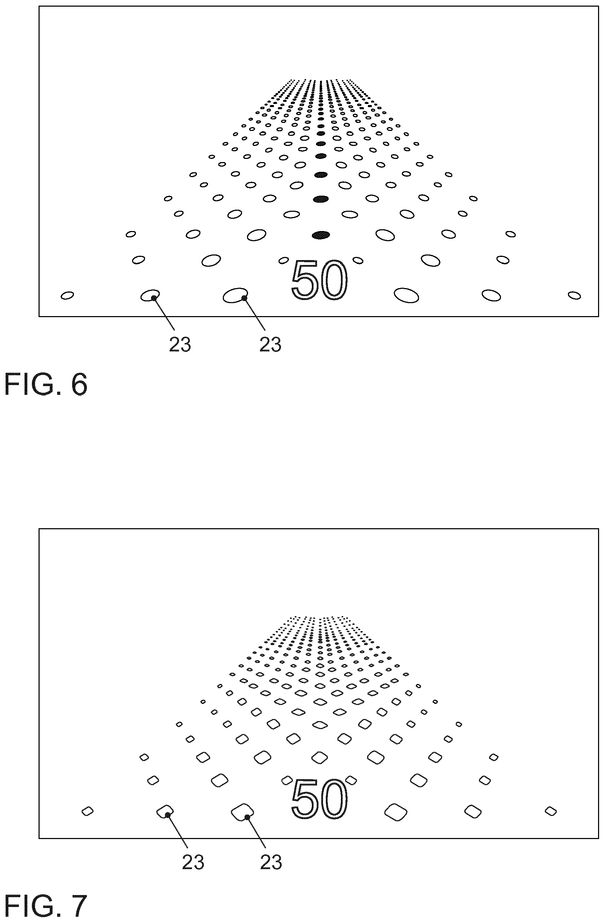

In der Fig. 6 ist das Stadium gezeigt, wo eine vollflächige Auffüllung der Symbole 23 erreicht ist. Diese Darstellung wird typischerweise bei voller Tageshelligkeit mit Sonnenschein gewählt. Wenn die Füllung der Symbole stufenlos erfolgt, kann die Berechnung des Füllgrades in Abhängigkeit der Helligkeitsverhältnisse erfolgen.

Eine Beispielberechnung des Füllgrades FG in Abhängigkeit der Umgebungshelligkeit UH wird wie folgt vorgestellt.

Die minimale Umgebungshelligkeit, bei der die Umrandung gerade wie in Fig. 5 dargestellt wird, sei $UH_{min}$. Demgemäß sei die Umgebungshelligkeit bei voller Tageshelligkeit $UH_{max}$. Wenn der Füllgrad der Symbole bei der Darstellung bei minimaler Umgebungshelligkeit $FG_R$ ist, dann berechnet sich der Füllgrad FG der Symbole bei einem gemessenen Helligkeitswert $UH$

$$FG = FG_R * \frac{UH}{UH_{min}}$$

nach der Formel:  , wobei das Infotainmentsystem so kalibriert sein muss, dass $\frac{UH_{max}}{UH_{min}} = \frac{1}{FG_R}$ gilt.

Ebenfalls ist denkbar, dass der Füllgrad für die Minimaleinstellung $FG_R$ durch den Fahrer einstellbar ist.

Bei erweiterten Ausführungsformen werden zusätzliche Adaptionen vorgenommen. In einer ersten Erweiterung bezieht sich die Erweiterung auf andere schwierige Lichtverhältnisse.

Liegen anderweitige schwierige Sichtverhältnisse vor, wird das adaptive Vorgehen zudem auf die Form der Symbole 23 bezogen. Im Falle von starkem Regen kann z.B. von der Verwendung runder Raster-Symbole 23 abgesehen und die Form zu eher eckigen Symbolen 23 verändert werden. Auch liegt der Vorteil der Adaption der Rastersymbole 23 in Abhängigkeit von Umweltgebenheiten in einer optimierten Wahrnehmbarkeit der AR-HUD Anzeigeelemente. Die Darstellung des Fahrtrichtungsverlaufs mit eckigen Raster-Symbolen ist in Fig. 7 gezeigt. Sollten Umweltgegebenheiten vorliegen, die die Verwendung bestimmter Formen ausschließen bzw. nicht empfehlenswert erscheinen lassen (z.B. Starkregen oder ein bestimmter Untergrund der Straße), sollte die Form der Elemente laufend angepasst werden. In dieser Darstellung sind eher rechteckige Elemente dargestellt, die aus den runden Elementen hervorgehen können. Voraussetzung dafür ist, dass eine entsprechend genaue Sensorik im Fahrzeug vorhanden ist. Regensensoren sind heute keine Sonderausstattung mehr in Kraftfahrzeugen und können diesen Zweck erfüllen. Alternativ käme auch eine indirekte Erfassung in Frage. Wenn z.B. die Geschwindigkeit des Wischermotors erfasst und ausgewertet wird, kann ebenfalls die Information über die Stärke des Regens gewonnen werden. Ebenfalls kämen Bildauswerteverfahren mit Kameras als Alternative in Betracht. Die Form der Rastersymbole müsste dann in kurzen Zeitabständen aktualisiert werden, weil die Niederschlagsituation sich während der Fahrt schnell ändern kann.

Darüber hinaus könnte eine Veränderung ebenfalls dann vorgenommen werden, wenn auf Seiten des Fahrzeugs bestimmte Veränderungen beim Betriebsmodus eintreten (z.B. die Auswahl eines Sportprogramms). In modernen Fahrzeugen wirken sich solche Einstellungen auf das komplette Antriebssystem aus, also Motor, Getriebe und Fahrwerk. Der Betriebsmodus wird dem Fahrer oft auf einer Anzeigeeinheit im Kombiinstrument 110 angezeigt. Die Erweiterung besteht hier darin, dass eine Anzeige auch über das Head-Up Display 20 erfolgt. In einer Ausgestaltung würden jeweils unterschiedliche Rastersymbole 23 je nach Fahrmodus eingesetzt werden.

Bei dem Fahrprogramm "Sport" könnten z.B. nach vorne gerichtete Dreiecke als Rastersymbole 23 eingesetzt werden. Bei dem Fahrprogramm "Normal" könnten Rechteck-Symbole verwendet werden. Bei dem Fahrprogramm "Eco" könnten Kreis-Symbole verwendet werden. Zusätzlich könnte eine farbliche Gestaltung der Raster-Symbole für eine bessere Erkennbarkeit der Bedeutung der Symbole sorgen. Die Symbole für den "Sport"-Modus würden die Farbe Rot erhalten. Die Symbole für den "Normal"-Modus würden die Farbe Blau oder Weiß erhalten. Die Symbole für den "Eco"-Modus würden die Farbe Grün oder Blau erhalten.

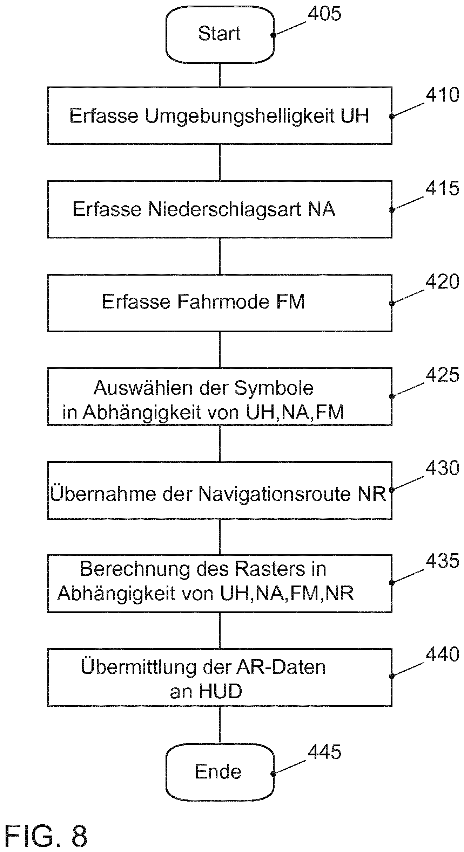

In der Fig. 8 wird jetzt noch der Ablauf eines Programms gezeigt, das zur Durchführung des erfindungsgemäßen Verfahrens in der Recheneinheit 40 abgearbeitet wird.

Der Programmstart ist mit der Bezugszahl 405 bezeichnet. Im Programmschritt 410 wird die Umgebungshelligkeit UH für das Fahrzeug 10 erfasst. Dazu kann im Cockpit ein dedizierter Helligkeitssensor vorgesehen sein. Oft sind aber schon Helligkeitssensoren in anderen Komponenten verbaut. Als Beispiel wird das Kombiinstrument 110 und der berührungsempfindliche Bildschirm 30 genannt. Die gemessenen Helligkeitswerte würden über die Bussysteme 100 und 70 in die Recheneinheit 40 übertragen werden. Eine andere Form der Erfassung der Umgebungshelligkeit kann auch durch Bildauswertung des von der Kamera 150 aufgenommen Bildes erfolgen. Im Programmschritt 415 wird die Niederschlagsart bzw. Niederschlagsstärke NA erfasst. Dies kann so erfolgen wie bereits beschrieben, mit Regensensor, Geschwindigkeit des Wischermotors oder ebenfalls durch ein Bildausiverteverfahren und Kamera 150. Im nachfolgenden Schritt 420 wird der eingestellte Fahrmodus FM erfasst. Die Einstellung wird sowieso in der Recheneinheit 40 in einer entsprechenden Registerstelle abgespeichert. Der Wert an der Registerstelle wird in diesem Schritt ausgelesen. Danach erfolgt die Auswahl der Rastersymbole 23 in Abhängigkeit der erfassten Parameter UH, NA, FM. Die Piktogramme für die Symbole sind in einer Tabelle eingetragen, die im Speicher 60 abgespeichert ist. Es können dort eine Vielzahl von Piktogrammen abgelegt sein, z.B. für die verschiedenen Füllgrade bei einer feinstufigen Abstufung. So können dann fertige Symbole bereits mit dem gewünschten Füllgrad abgerufen werden, ohne sie umrechnen zu müssen. Anschließend erfolgt im Programmschritt 430 die Übernahme der Navigationsroute von dem Navigationssystem 130 in die Recheneinheit 40. Danach erfolgt im Schritt 435 dann die Berechnung des Rasters 22 für die Einblendung auf dem Head-Up Display 20 mit den ausgewählten Symbolen 23 für die geplante Navigationsroute. Wie dieser Schritt ausgeführt wird, ist von den entsprechenden Berechnungsmethoden der bekannten Navigationssysteme bekannt. Schließlich werden die Daten für die Einblendung des Rasters 22 im Schritt 440 an das Head-Up Display 20 übertragen. Dieses blendet das berechnete Raster 22 dann in das Sichtfeld des Fahrers ein. Das Programm endet im Programmschritt 445.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können. Das in den Patentansprüchen genannte Objekt kann ausdrücklich auch eine Person sein.

Eine andere Umweltgegebenheit, die ebenfalls der Grund für eine Anpassung der Rastersymbole sein kann, kann z.B. der Fahrbahnuntergrund sein. Bei bestimmten Pflasterungen wie Kopfsteinpflaster kann es z.B. vorteilhaft sein, abweichende Formen der Rastersymbole zu verwenden. Das gilt aber auch für andere Fahrbahnbeschaffenheiten (Beton, verschiedene Asphaltarten wie Flüsterasphalt, Wald- und Feldwege, etc.). Wenn viele Schlaglöcher auf der Fahrbahn vorhanden sind, sollte ebenfalls eine Anpassung erfolgen. Die Schlaglöcher sollten gut erkennbar sein, damit der Fahrer ihnen ausweichen kann. Auch wenn eine Vielzahl von Linienmarkierungen (z.B. Schraffuren bei Sperrflächen) auf der Fahrbahn vorhanden sind, könnte eine Anpassung der Symbole erfolgen.

Allgemein geht es darum, die Anpassung der Rastersymbole dynamisch an die Umweltgegebenheiten anzupassen. Wenn sich das Fahrzeug in einer städtischen Umgebung bewegt, wo das Umfeld eher einem Grauton entspricht, kann durch Verändern der Farbe in Gelb, Blau, Grün für die Rastersymbole eine Akzentuierung erreicht werden. Bei einer bunteren ländlichen Umgebung können die Rastersymbole eher in Grautönen oder anderen monochromen Tönen bleiben. Hier würde also die Fahrbahnumgebung ausgewertet werden. Wenn auf der Fahrbahn viele Fahrzeuge unterwegs sind, z.B. auf einer Autobahn mit sehr vielen Pkw oder Lkw, und beim Heranfahren an ein Stauende die Bremslichter leuchten, sollte jedenfalls eine andere Farbe als Rot für die Rastersymbole gewählt werden. Hier würde also die Verkehrssituation als Umweltgegebenheit ausgewertet werden. Die Anpassung sollte möglichst dynamisch erfolgen. In einer einfacheren Variante würde die Anpassung wegen der Fahrbahnumgebung durch die Navigationsroute vorgegeben werden und wäre in dieser Hinsicht eher statisch.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Die Erfindung wird in den Ausführungsbeispielen am Beispiel des Einsatzes in Fahrzeugen genauer erläutert. Von besonderem Interesse kann die Anwendung auch für den Bereich der Einsatzfahrzeuge von Feuerwehr, Ärzten, Polizei, Katastrophenschutz etc. sein, um die Einsatzkräfte dabei zu unterstützen, besonders schnell hilfsbedürftige Personen aufzufinden oder um Gefahren abzuwenden. Hier wird auch auf die Einsatzmöglichkeit bei Flugzeugen und Helikoptern zum Beispiel bei Landemanövern oder Sucheinsätzen etc. hingewiesen.

Es wird aber darauf hingewiesen, dass der Einsatz nicht darauf beschränkt ist. Die Erfindung kann immer dann eingesetzt werden, wenn mit AR-Einblendungen das Sichtfeld eines Fahrers, einer Bedienperson oder auch einfach nur einer Person mit Datenbrille angereichert werden kann.

Auch bei ferngesteuerten Geräten wie Robotern, bei denen die Fernsteuerung über einen Monitor erfolgt, auf dem ein Kamerabild wiedergegeben wird, können AR Einblendungen die Bedienung erleichtern. Also besteht hier auch eine Einsatzmöglichkeit.

**Bezugszeichenliste**

| | |
|---|---|
| 10 | Fahrzeug |
| 20 | Head-Up Display HUD |
| 21 | virtuelle Projektionsfläche |
| 22 | Raster |
| 23 | Rastersymbol |
| 30 | berührungsempfindliche Anzeigeeinheit |
| 40 | Recheneinheit |
| 50 | Eingabeeinheit |
| 60 | Speichereinheit |
| 70 | Datenleitung zur Anzeigeeinheit |
| 80 | Datenleitung zur Speichereinheit |
| 90 | Datenleitung zur Eingabeeinheit |
| 100 | Datenbus |
| 110 | Kombiinstrument |
| 120 | Telefon |
| 130 | Navigationsgerät |
| 140 | Radio |
| 150 | Kamera |
| 160 | Kommunikationsmodul |
| 200 | Infotainment-System |
| 405 - 445 | verschiedene Programmschritte |

**Patentansprüche**

1. Verfahren zur Anzeige des Verlaufs einer Trajektorie vor einem Fahrzeug (10) oder vor einer Person, einem Fußgänger, einem Fahrrad, oder einem Krad, mit Hilfe einer Augmented Reality-Anzeigeeinheit (20) in Form eines Head-Up Display (HUD) , einer Datenbrille oder eines Monitors, auf dem ein Kamerabild angezeigt wird, wobei die Trajektorie im Sichtfeld des Fahrers, der Person oder des Fußgängers auf der Augmented Reality-Anzeigeeinheit (20) eingeblendet wird, wobei der Trajektorien-Verlauf in Rasterform dargestellt wird, **dadurch gekennzeichnet, dass** die Punkte des Rasters (22) mit Symbolen (23) dargestellt werden, von denen je nach Umweltgegebenheit nur die Umrandung oder die vollständig ausgefüllten Symbole (23) dargestellt werden, wobei als eine erste Umweltgegebenheit die Umgebungshelligkeit erfasst und ausgewertet wird, wobei bei niedriger Umgebungshelligkeit die Punkte des Rasters (22) mit Symbolen (23) dargestellt werden, von denen nur die Umrandung dargestellt wird und wobei bei hoher Umgebungshelligkeit die Punkte des Rasters (22) mit Symbolen (23) dargestellt werden, die vollflächig ausgefüllt dargestellt werden.

2. Verfahren nach Anspruch 1, wobei, wenn die Umgebungshelligkeit zunimmt, die Symbole (23) des Rasters (22) zunehmend stärker hervorgehoben werden durch Auffüllen der Symbole vom Rand her.

3. Verfahren nach Anspruch 2, wobei das Auffüllen stufenlos erfolgt.

4. Verfahren nach Anspruch 2, wobei das Auffüllen als feinstufige Auffüllung erfolgt.

5. Verfahren nach einem der vorhergehenden Ansprüche, wobei eine Darstellung eines Fahrtrichtungsverlaufs mit Hilfe eines Punktrasters (22) erfolgt, das Punktraster (22) erstreckt sich über die Breite einer Fahrspur, auf der das Fahrzeug (10) sich bewegt, wobei die Punkte im mittleren Bereich (23) stärker betont werden als die Punkte an den Rändern der Fahrspur.

6. Verfahren nach einem der vorhergehenden Ansprüche, wobei als eine zweite Umweltgegebenheit Niederschlagsarten wie Regen, Starkregen, Schnee, Hagel oder Nebel erfasst und ausgewertet werden.

7. Verfahren nach Anspruch 6, wobei bei Regen und / oder Starkregen die Punkte des Rasters (22) mit Symbolen (23) dargestellt werden, die eine Form aufweisen, die von Regen, insbesondere Regentropfen, besser unterschieden werden kann, wobei die Form der Symbole (23) einer rechteckigen Form entspricht.

8. Verfahren nach einem der Ansprüche 1 bis 7, wobei als eine dritte Umweltgegebenheit Betriebsmodi des Fahrzeuges, nämlich Motoreinstellungen, Fahrwerkseinstellungen und Fahrassistenzeinstellungen, erfasst und ausgewertet werden.

9. Verfahren nach einem der Ansprüche 1 bis 8, wobei als eine vierte Umweltgegebenheit die Fahrbahnbeschaffenheit und / oder die Fahrbahnumgebung und / oder die Verkehrssituation erfasst und ausgewertet werden.

10. Verfahren nach einem der vorhergehenden Ansprüche, wobei je nach Umweltgegebenheit die Größe und / oder die Farbe der Symbole (23) variiert wird.

11. Vorrichtung, die zur Durchführung des Verfahrens nach einem der vorhergehenden Ansprüche eingerichtet ist, aufweisend eine Augmented Reality-Anzeigeeinheit (20), mit der virtuelle Zusatzinformationen in das Sichtfeld des Fahrers, der Person oder des Fußgängers eingeblendet werden können, und eine Recheneinheit (40) sowie ein oder mehrere Komponenten (110, 130, 150, 160) für die Erfassung von Umweltgegebenheiten, die zumindest die Umgebungshelligkeit umfassen, **dadurch gekennzeichnet, dass** die Recheneinheit (40) für die Anzeige eines Trajektorien-Verlaufs ein Raster (22) berechnet, wobei die Recheneinheit (40) für die Punkte des Rasters (22) entweder in Abhängigkeit der Umgebungshelligkeit entsprechend vorberechnete und abgespeicherte Symbole (23) auswählt, die nur die Umrandung oder die vollständig ausgefüllten Symbole (23) zeigen oder wobei die Recheneinheit (40) die ausgewählten Symbole (23) umrechnet, um je nach Umgebungshelligkeit nur die Umrandung oder die vollständig ausgefüllten Symbole (23) darstellen zu können.

12. Vorrichtung nach Anspruch 11, wobei die Anzeigeeinheit (20) ein Head-Up Display (HUD) oder eine Datenbrille ist.

13. Kraftfahrzeug, **dadurch gekennzeichnet, dass** das Kraftfahrzeug (10) eine Vorrichtung nach einem der Ansprüche 11 bis 12 aufweist.

14. Computerprogramm, **dadurch gekennzeichnet, dass** das Computerprogramm ausgelegt ist, bei Abarbeitung in einer Recheneinheit (40) in einer Vorrichtung gemäss Anspruch 11 die Schritte des Verfahrens zur Anzeige des Verlaufs einer Trajektorie vor einem Fahrzeug (10) oder vor einer Person, einem Fußgänger, einem Fahrrad, oder einem Krad nach einem der Ansprüche 1 bis 10 durchzuführen.

**Claims**

1. Method for displaying the course of a trajectory in front of a vehicle (10) or in front of a person, a pedestrian, a bicycle or a motorcycle with the aid of an augmented reality display unit (20) in the form of a head-up display (HUD), data glasses or a monitor, on which a camera image is displayed, wherein the trajectory is overlaid in the field of view of the driver, the person or the pedestrian on the augmented reality display unit (20), wherein the trajectory course is represented in grid form, **characterized in that** the points of the grid (22) are represented using symbols (23), of which only the border or the completely filled symbols (23) are represented depending on the environmental condition, wherein the ambient brightness is detected and analysed as a first environmental condition, wherein, in the case of low ambient brightness, the points of the grid (22) are represented using symbols (23), of which only the border is represented, and wherein, in the case of high ambient brightness, the points of the grid (22) are represented using symbols (23) which are represented filled up over the full surface.

2. Method according to Claim 1, wherein, if the ambient brightness increases, the symbols (23) of the grid (22) are highlighted increasingly more strongly by filling up the symbols from the edge.

3. Method according to Claim 2, wherein the filling-up process takes place continuously.

4. Method according to Claim 2, wherein the filling-up process takes place as a finely graded filling-up process.

5. Method according to any one of the preceding claims, wherein a driving direction course is represented with the aid of a point grid (22), the point grid (22) extends over the width of a lane on which the vehicle (10) is moving, wherein the points in the middle region (23) are emphasized more strongly than the points at the edges of the lane.

6. Method according to any one of the preceding claims, wherein types of precipitation such as rain, heavy rain, snow, hail, or fog are detected and analysed as a second environmental condition.

7. Method according to Claim 6, wherein, in the case of rain and/or heavy rain, the points of the grid (22) are represented using symbols (23) which have a shape which can be differentiated better from rain, in particular raindrops, wherein the shape of the symbols (23) corresponds to a rectangular shape.

8. Method according to any one of Claims 1 to 7, wherein operating modes of the vehicle, such as engine settings, chassis settings, and driver assistance settings, are detected and analysed as a third environmental condition.

9. Method according to any one of Claims 1 to 8, wherein the roadway composition and/or the roadway environment and/or the traffic situation is/are detected and analysed as a fourth environmental condition.

10. Method according to any one of the preceding claims, wherein the size and/or the colour of the symbols (23) is/are varied depending on the environmental condition.

11. Device which is configured to carry out the method according to any one of the preceding claims, comprising an augmented reality display unit (20), using which virtual items of additional information can be overlaid in the field of view of the driver, the person or the pedestrian, and a processing unit (40) and also one or more components (110, 130, 150, 160) for detecting environmental conditions which comprise at least the ambient brightness, **characterized in that** the processing unit (40) computes a grid (22) for the display of a trajectory course, wherein the processing unit (40) either selects correspondingly precomputed and stored symbols (23) for the points of the grid (22), which only show the border or the completely filled symbols (23), in dependence on the ambient brightness, or wherein the processing unit (40) converts the selected symbols (23) in order to be able to represent only the border or the completely filled symbols (23) depending on the ambient brightness.

12. Device according to Claim 11, wherein the display unit (20) is a head-up display (HUD) or data glasses.

13. Motor vehicle, **characterized in that** the motor vehicle (10) comprises a device according to any one of Claims 11 to 12.

14. Computer program, **characterized in that** the computer program is designed, upon execution in a processing unit (40) in a device according to Claim 11, to carry out the steps of the method for displaying the course of a trajectory in front of a vehicle (10) or in front of a person, a pedestrian, a bicycle or a motorcycle according to any one of Claims 1 to 10.

**Revendications**

1. Procédé d'affichage du profil d'une trajectoire devant un véhicule (10) ou devant une personne, un piéton, un vélo ou une moto, à l'aide d'une unité d'affichage à réalité augmentée (20) se présentant sous la forme d'un affichage tête haute (HUD), de lunettes de données ou d'un moniteur sur lequel une image de caméra est affichée, la trajectoire dans le champ de vision du conducteur, de la personne ou du piéton étant affichée sur l'unité d'affichage à réalité augmentée (20), le profil de trajectoire étant représenté sous la forme d'une trame, **caractérisé en ce que** les points de la trame (22) sont représentés par des symboles (23) dont seule la bordure ou les symboles (23) complètement remplis sont représentés en fonction de la condition environnementale, la luminosité ambiante étant détectée et évaluée comme première condition environnementale, les points de la trame (22) étant représentés, lorsque la luminosité ambiante est faible, par des symboles (23) dont seule la bordure est représentée et les points de la trame (22) étant représentés, lorsque la luminosité ambiante est élevée, par des symboles (23) qui sont représentés remplis sur toute la surface.

2. Procédé selon la revendication 1, lorsque la luminosité ambiante augmente, les symboles (23) de la trame (22) étant de plus en plus accentués par remplissage des symboles depuis le bord.

3. Procédé selon la revendication 2, le remplissage étant effectué en continu.

4. Procédé selon la revendication 2, le remplissage étant effectué sous forme de remplissage fin.

5. Procédé selon l'une des revendications précédentes, une représentation d'un profil de sens de circulation étant effectuée à l'aide d'une trame de points (22), la trame de points (22) s'étendant sur la largeur d'une voie de circulation sur laquelle le véhicule (10) se déplace, les points dans la zone médiane (23) étant plus accentués que les points au niveau des bords de la voie de circulation.

6. Procédé selon l'une des revendications précédentes, les types de précipitations tels que la pluie, les fortes pluies, la neige, la grêle ou le brouillard étant enregistrés et évalués comme deuxième condition environnementale.

7. Procédé selon la revendication 6, en cas de pluie et/ou de fortes pluies les points de la trame (22) étant représentés par des symboles (23) qui ont une forme qui peut être mieux distinguée de la pluie, notamment des gouttes de pluie, la forme des symboles (23) correspondant à une forme rectangulaire.

8. Procédé selon l'une des revendications 1 à 7, des modes de fonctionnement du véhicule, à savoir des réglages de moteur, des réglages de mécanismes de roulement et des réglages d'assistance à la conduite, étant détectés et évalués comme troisième condition environnementale.

9. Procédé selon l'une des revendications 1 à 8, l'état de la chaussée et/ou l'environnement de la chaussée et/ou la situation de circulation étant détectés et évalués comme quatrième condition environnementale.

10. Procédé selon l'une des revendications précédentes, la dimension et/ou la couleur des symboles (23) étant variées en fonction de la condition environnementale.

11. Dispositif conçu pour mettre en œuvre le procédé selon l'une des revendications précédentes, ledit dispositif comprenant une unité d'affichage à réalité augmentée (20) permettant d'afficher des informations virtuelles supplémentaires dans le champ de vision du conducteur, de la personne ou du piéton, et une unité de calcul (40) et un ou plusieurs composants (110, 130, 150, 160) destinés à détecter les conditions environnementales qui comprennent au moins la luminosité ambiante, **caractérisé en ce que** l'unité de calcul (40) calcule une trame (22) afin d'afficher un profil de trajectoire, l'unité de calcul (40) sélectionnant, pour les points de la trame (22), des symboles (23) qui sont précalculés et mémorisés de façon appropriée en fonction de la luminosité ambiante et qui ne représentent que la bordure ou les symboles (23) complètement remplis ou l'unité de calcul (40) convertissant les symboles sélectionnés (23) afin de pouvoir représenter uniquement la bordure ou les symboles (23) complètement remplis en fonction de la luminosité ambiante.

12. Dispositif selon la revendication 11, l'unité d'affichage (20) étant un affichage tête haute (HUD) ou des lunettes de données.

13. Véhicule automobile, **caractérisé en ce que** le véhicule automobile (10) comporte un dispositif selon l'une des revendications 11 à 12.

14. Logiciel, **caractérisé en ce que** le logiciel conçoit, lors d'un traitement dans une unité de calcul (40) d'un dispositif selon la revendication 11, les étapes du procédé visant à afficher le profil d'une trajectoire devant un véhicule (10) ou devant une personne, un piéton, un vélo ou une moto selon l'une des revendications 1 à 10.

7-15m

10

20

21

FIG. 1

FIG.2

FIG. 3

FIG. 4

FIG. 5

FIG. 6

FIG. 7

Start — 405

Erfasse Umgebungshelligkeit UH — 410

Erfasse Niederschlagsart NA — 415

Erfasse Fahrmode FM — 420

Auswählen der Symbole
in Abhängigkeit von UH,NA,FM — 425

Übernahme der Navigationsroute NR — 430

Berechnung des Rasters in
Abhängigkeit von UH,NA,FM,NR — 435

Übermittlung der AR-Daten
an HUD — 440

Ende — 445

## FIG. 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102007016868 A1
- WO 2005053991 A1
- DE 102011075887 A1
- DE 102012222380 A1
- DE 102016200136 A1
- WO 2005121707 A

### In der Beschreibung aufgeführte Nicht-Patentliteratur

- *WayRay Augment Reality Navigation System for Alibaba,* 15. Marz 2017